# EUROPÄISCHE PATENTSCHRIFT

(11) **EP 0 635 386 B1**
(45) Veröffentlichungstag und Bekanntmachung des Hinweises auf die Patenterteilung: **15.10.1997**
(21) Anmeldenummer: 94109770.1
(22) Anmeldetag: 24.06.1994
(51) Int. Cl.: B60J 7/22

(54) **Windabweiser und Verfahren zu dessen Herstellung**
Wind deflector and method for producing the same
Déflecteur du vent et procédé pour son fabrication

(30) Priorität: 15.07.1993 DE 4323694
(43) Veröffentlichungstag der Anmeldung: 25.01.1995
(73) Patentinhaber: PAUL ZITZMANN GmbH & Co. KG, D-96342 Stockheim (DE)
(72) Erfinder: Scholz, Alfred, D-96342 Stockheim (DE); Söhnlein, Heinrich, D-96342 Stockheim-Hasslach (DE)
(74) Vertreter: Eichstädt, Alfred, Dipl.-Ing.

(56) Entgegenhaltungen:
- EP-A- 0 491 418
- CH-A- 389 175
- DE-A- 2 935 344
- DE-A- 3 446 916
- DE-A- 3 906 903
- DE-A- 3 913 567
- DE-C- 2 644 848
- DE-C- 3 415 361
- DE-C- 3 640 168
- DE-U- 7 828 941
- US-A- 2 550 037
- US-A- 3 311 406

## Beschreibung

Die Erfindung bezieht sich auf einen Windabweiser für eine Dachöffnung in einem Kraftfahrzeug mit den im Oberbegriff des Anspruches 1 angegebenen Merkmalen und auf ein Verfahren zu dessen Herstellung gemäß Anspruch 9.

Windabweiser der gattungsgemäßen Art sind in verschiedenen Ausführungen bekannt, z.B. DE-A-3 446 916 und DE 78 28 941 U1. Bei einer verbreiteten Ausführung (Mercedes-Baureihe 230) ist am Rahmen der Dachöffnung vorne querverlaufend ein Windabweiser in Form eines Aufstellbleches vorgesehen, das an dem Rahmen schwenkbeweglich angelenkt ist und unter der Wirkung von im Schwenklagerbereich vorgesehenen Schenkelfedern sich aufstellt, sobald das Dachfenster oder das Schiebedach nach hinten verschoben wird. Das Dachfenster bzw. das Schiebedach ist dabei in dem Rahmen längsverschieblich gefuhrt. An den Seitenenden weist das Windabweisungsblech Antriebsflächen auf, auf die Teile des Schiebedaches oder des Dachschiebefensters aufgleiten, so daß beim Zurückschieben des Schiebedaches oder des Dachschiebefensters das Windabweisungsblech gegen die Kraft der Aufstellfeder wieder niedergedrückt wird. Das Windabweisungsblech dient dazu, im Falle des geöffneten Dachfensters bzw. des Schiebedaches, den Fahrtwind nach oben hin abzulenken. Es reicht dabei je nach Karosserieformung, wenn der Windabweiser unter dem Dachkantenende nur geringfügig (0,5 bis 2 cm) aus der Dachebene oben hervorsteht, um zu bewirken, daß ein schädlicher Luftzug bei geöffnetem Dachfenster in der Fahrgastzelle nicht entstehen kann.

Bei einer anderen Ausführungsart der BMW-Baureihen 300 und 500 besteht der Windabweiser aus Kunststoff und weist seitlich zwei nach hinten sich erstreckende Lagerungsschenkel auf, deren Enden Lagerungszapfen aufweisen, die in entsprechende Lagerungsausnehmungen des Rahmens eingesetzt sind. Beide Lagerungsausnehmungen sind kongruent angeordnet, so daß hierdurch eine Schwenkachse gegeben ist, um die der Windabweiser nach oben verschwenkbar ist. Zum Zwecke des Niederdrückens und des Aufstellens sind Abgleitflächen an diesen Schenkel vorgesehen, die in Eingriff mit Niederhaltern am verschieblichen Teil des Dachfensters gelangen. Zum Aufstellen des Windabweisers sind in dem vorderen Querteil an der Unterseite Lagerungsausnehmungen zur Aufnahme von Formfedern vorgesehen, die in die Lagerungsausnehmungen hineindrückbar und so vorgespannt sind, daß beim Zurückschieben des Dachfensters diese den Windabweiser nach oben verschwenken. Es handelt sich dabei um Doppelschenkelfedern, die um einen Lagerzapfen schraubenförmig gewickelt sind und einen längeren Federarm und einen kurzen sich an der Unterseite des Windabweisers abstützenden Widerlagerungsfederarm aufweisen. Weiterhin kann das Aufstellen des Kunststoffwindabweisers über in den Seitenschenkeln nachträglich montierte oder aufgesteckte Blattfedern erfolgen. Die bekannten Windabweiser aus Kunststoff weisen aber den Nachteil auf, daß sie, bedingt durch die geringe Höhe und die große Länge (Breite der Dachöffnung) nur mit großen Fertigungstoleranzen gefertigt werden können. So weisen diese Windabweiser Höhendifferenzen von bis zu 5 mm bei einer Länge von ca. 90 cm auf. Zieht man ferner in Betracht, daß die Gesamthöhe ca. 1,5 bis ca. 2,5 cm beträgt, so ergibt sich daraus, daß bei der Auslegung des Rahmens des Dachfensters eine Einbauhöhe berücksichtigt werden muß, in der die Windabweiser mit den angegebenen Toleranzen auch noch unterbringbar sind, ohne an Rahmenteile anzustoßen, um Klappergeräusche zu vermeiden. Einbauhöhe in einem Dachraum eines Kraftfahrzeuges bedeutet zugleich aber auch Einschränkung der Kopfhöhe für den Fahrer bzw. Fahrgast. Desto höher die Einbautiefe des Dachfensters, die im wesentlichen durch die Höhe und die Toleranz des Windabweisers bestimmt ist, desto geringer ist die Kopfhöhe des Fahrers.

Darüber hinaus weisen die bekannten Windabweiser den Nachteil auf, daß die Federelemente als relativ komplizierte Elemente erst montiert werden müssen, was den Montageaufwand wesentlich erhöht.

Der Erfindung liegt, ausgehend vom gattungsgemäßen Stand der Technik, die Aufgabe zugrunde, einen Windabweiser mit höherer Maßgenauigkeit und Stabilität zu gestalten, der darüber hinaus einfacher zu montieren ist und weitestgehend automatisch gefertigt werden kann. Der Windabweiser soll ferner ökonomisch recyclebar sein.

Gelöst wird die Aufgabe durch die im Anspruch 1 angegebene technische Lehre und durch das im Anspruch 9 ängegebene Verfahren zur Herstellung eines erfindungsgemäß ausgebildeten Windabweisers.

Vorteilhafte Weiterbildungen der Erfindung sind in den Ansprüchen 2 bis 8 angegeben, ein Verfahren zur Herstellung des Windabweisers nach der Erfindung im Anspruch 9 sowie vorteilhafte Verfahrensschritte in den weiteren Ansprüchen 10 und 11.

Ein nach der Erfindung hergestellter Windabweiser zeichnet sich durch eine hohe Verwindungssteifigkeit und Stabilität aus, die bei herkömmlichen Windabweisern nicht gegeben ist. Darüber hinaus läßt sich der Windabweiser gegenüber solchen aus glasfaserverstärktem Kunststoff nach der Gebrauchsdauer auf einfache Weise recyclen. Das Material ist mehrfach für den gleichen Einsatz wiederverwertbar. Eine zusätzliche Maßnahme zur Verstärkung der Stabilität ist nicht notwendig, beispielsweise keine Glasfasern, wie sie bei Kunststoffwindabweisern notwendig sind, um eine vertretbare Stabilität zu erhalten. Ein wesentlicher Vorteil liegt aber auch darin, daß der Windabweiser aus Metalldruckguß in wesentlich geringeren Toleranzen herstellbar ist. Diese betragen auf ca. 70 bis 90 cm Länge nur ca. 1 mm, wodurch die Einbauhöhe um mehr als 4 mm reduziert werden kann, was der Kopffreiheit im Fahrzeug zugute kommt. Ein weiterer Vorteil liegt darin, daß die Federelemente in das Material direkt mit den Verankerungsende eingelegt werden können, zu welchem Zweck diese aus Blattfedern bestehen. Eine gesonderte Montage ist nicht notwendig. Vielmehr werden die Federn mit den Verankerungsschenkeln gesichert in die Rahmenkonstruktion des Windabweisers eingebettet und darin gehalten. Bei Verwendung von Magnesium oder Aluminium sowie deren Legierung als Metalldruckgußmaterial ist darüber hinaus ein geringeres Gewicht des Windabweisers gegenüber herkömmlichen Konstruktionen gegeben.

Ferner lassen sich auch Kunststoffdämpfungspolster, die notwendig sind, um ein Klappergeräusch im Rahmen des Dachfensters zu vermeiden, auf einfache Weise anspritzen. Dasselbe trifft auch für Kunststoffgleitpolster an den Federenden zu. Beide Vorgänge können ebenfalls voll automatisiert werden.

Durch die positiven Materialeigenschaften können sogar Hohlräume gebildet werden, so daß trotz Erreichen einer hohen Stabilität über Querrippen ein äußerst leichter Windabweiser gegeben ist und somit eine weitere Gewichtsreduktion gegenüber herkömmlichen Windabweisern dann erzielbar ist, wenn diese aus Aluminium oder Magnesium bestehen.

Für die Herstellung des Windabweisers nach der Erfindung eignen sich bekannte Verfahren, so z.B. das Warmkammerverfahren und das Kaltkammerverfahren.

Derartige Druckgießverfahren sind z.B. im "Giesserei-Lexikon" 1990, erschienen im Verlag Schiele & Schön, beschrieben.

Das in der Zeichnung dargestellte Ausführungsbeispiel der Erfindung wird nachfolgend näher beschrieben.

In den Zeichnungen zeigen:
- Fig. 1: den Windabweiser in Einbaulage isoliert als Einzelteil mit Mittentrennung;
- Fig. 2: eine Unteransicht der Seitenschenkel mit einem Teilabschnitt des Windabweisungsteils;
- Fig. 3: eine schematische Darstellung des in den Rahmen eingedrückten Windabweisers bei geschlossenem Dach und
- Fig. 4: den Windabweiser in schematischer Darstellung in Aufstellposition bei geöffnetem Dach.

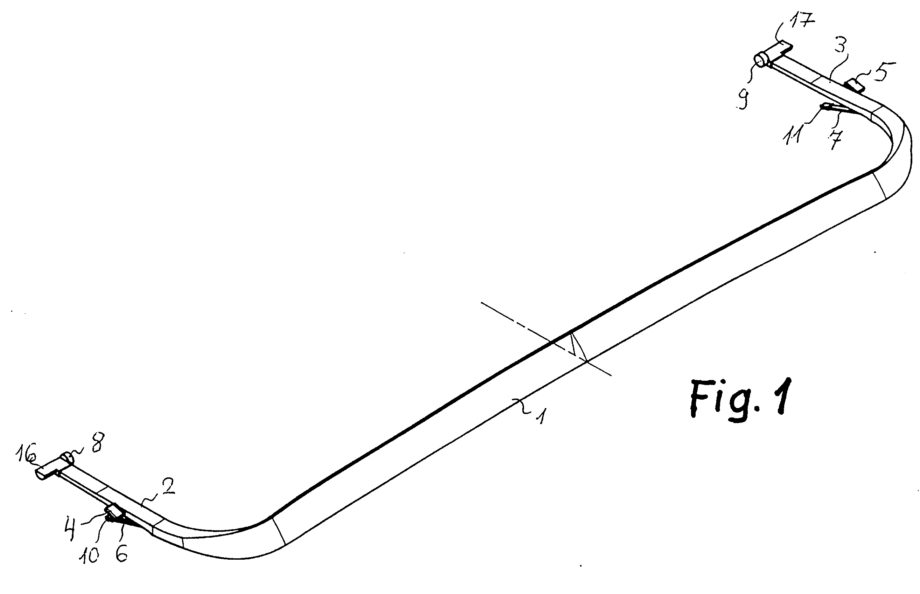

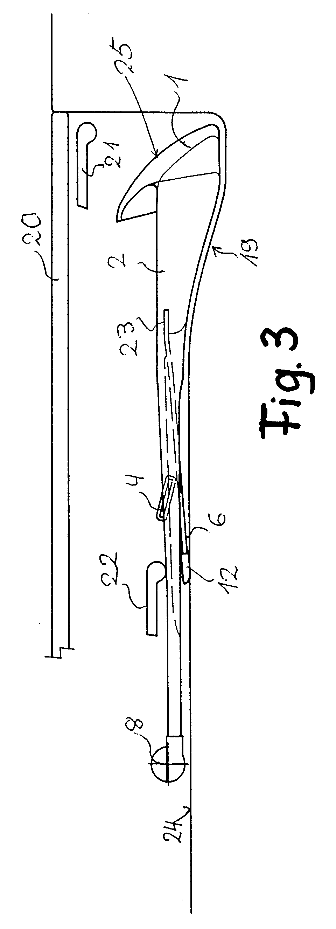

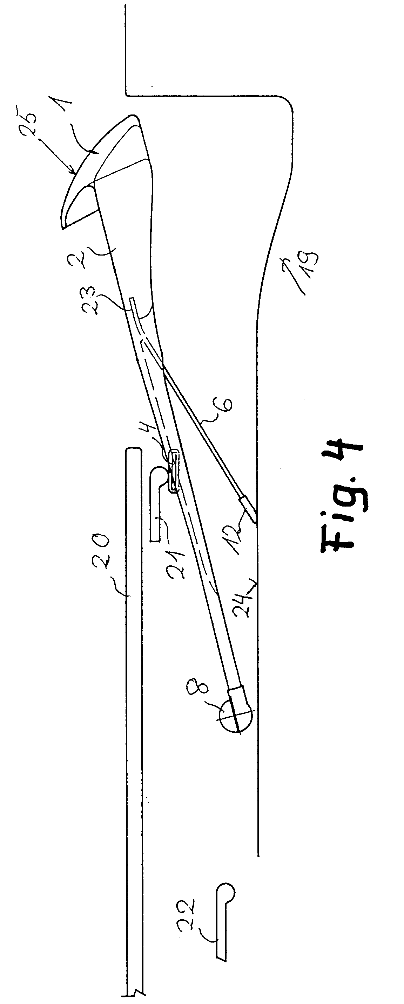

In Fig. 1 ist ein Windabweiser perspektivisch vereinfacht dargestellt, der im wesentlichen aus einem Mittenteil 1 besteht, der in diesem Fall geteilt gezeichnet ist und beispielsweise bei einem PKW eine Länge von ca. 70 bis ca. 90 cm aufweist. Der Mittenteil 1 ist auch das eigentliche Aufstellteil, das also aus der Dachöffnung als Überstand aus dem Dach vorsteht oder im Kantenbereich endet. Seitlich schließen sich an den Mittenteil 1 Schenkel 2 und 3 an, die sich im Fahrzeug nach hinten erstrecken und mit Lagerungszapfen 8 und 9 in Lagerungsausnehmungen des nicht dargestellten Rahmens des Dachfensters eingesetzt sind. Die weiterhin seitlich hervorstehenden Abschnitte 16 und 17 besitzen ebenfalls Lagerungs- und Fixierfunktionen, die aber in Bezug auf die Erfindung nicht von Bedeutung sind. Seitlich weisen die Schenkel 2 und 3 noch Anschlagselemente 4 und 5 auf, die das Verschwenken des Windabweisers nach oben beim Zurückschieben des Daches bzw. Dachfensters (Fig. 4) begrenzen. Die Oberseiten der Schenkel 2 und 3 sind zugleich als Abgleitflächen ausgebildet, so daß beim Vorschieben des Dachfensters der Windabweiser automatisch nach unten verschwenkt wird und beim Zurückschieben wieder nach oben, indem Niederhalter des Schiebefensters bzw. Schiebedaches auf den Flächen entlanggleiten. Das Aufrichten erfolgt durch die Kraft von Blattfedern 6 und 7, die Gleitansätze 10 und 11 an ihren Enden aufweisen. Diese Federn sind in den Bogenteilen der Schenkel 2 und 3 mit einem Verankerungsteil 23 (Fig. 3 und 4) eingebettet. Durch die Verwendung von Metalldruckgußmaterial ist die Festigkeit gegeben, um die Feder wirksam im Material festzuhalten und um die Kraftübertragung auf den Windabweiser sicherzustellen.

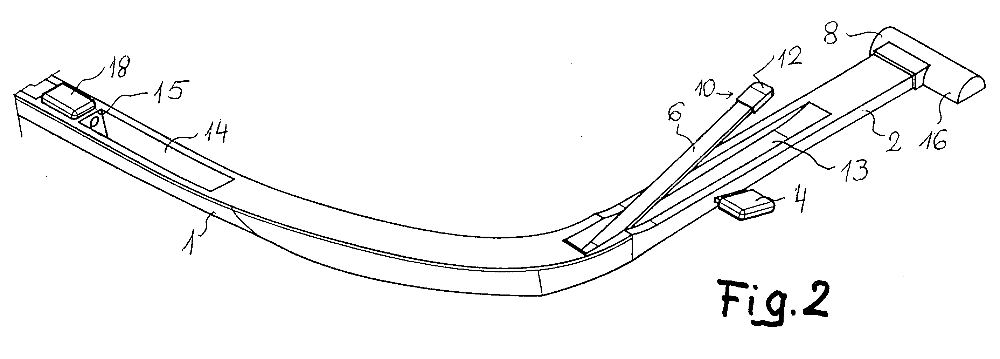

In Fig. 2 ist eine Teilansicht dargestellt, aus der ein Schenkel 2 mit einer Kammer 13 ersichtlich ist, in die die Feder 6 hineindrückbar ist. Um ein leichteres Gleiten auf dem Widerlager des Rahmens der in Fig. 3 und 4 dargestellten Gleitflächen 24 zu ermöglichen, sind auf die Gleitansätze 10 bzw. 11 Kunststoffgleitpolster 12 aufgespritzt. In gleicher Weise können auch auf der Unterseite des Mittenteils 1 in die dort zur Gewichtsreduzierung vorgesehenen Ausnehmungen 14 Kunststoffpolster 18 angespritzt sein, wodurch Klappergeräusche gänzlich vermieden werden. Weiterhin ist aus Fig. 2 ersichtlich, daß auf das Anschlagbegrenzungselement 4 ein Kunststoffpolster aufgespritzt ist, so daß auch hier eine Dämpfung bei der Anlage an einen Anschlag im Rahmen oder unterhalb eines Niederhalters gegeben ist. Die Feder 6 erstreckt sich mit ihrem freien federnden Schenkel in Richtung des Schwenklagers des Windabweisers, so daß das Aufstellen des Windabweisers gewährleistet ist und dieser gegen die Kraft der Feder 6 niedergedrückt werden kann. Die Windabweisungsfläche 25, also jene Fläche, die unmittelbar an der Dachöffnung aus der Ebene des Daches hervorsteht, kann dabei bogenförmig nach oben zulaufend ausgebildet sein, um eine gewünschte Windabweisung zu erreichen. Sie kann aber auch jede andere Form aufweisen. Die Gesamthöhe des Windabweisers bestimmt die bauliche Einbauhöhe im Dachfenster, wobei die Toleranz so gering ist, daß diese die Bauhöhe nicht merklich bestimmt. Die Verwendung von Metalldruckguß, insbesondere Magnesium- oder Aluminiumdruckguß, für einen Windabweiser weist zudem den Vorteil auf, daß bei gleichzeitiger Erreichung einer hohen Stabilität auch über die Länge des Windabweisers Krümmungen eingebracht werden können, ohne daß Toleranzabweichungen hierbei merklich in Erscheinung treten. Der Windabweiser kann also in seiner Form der Dachform in idealer Weise angepaßt werden. Hinzu kommt, daß bei der Krümmungsanpassung des Windabweisers sichergstellt ist, daß die Ausstellhöhe des Windabweisers über die gesamte Länge gleichbleibend sein kann.

In den Fig. 3 und 4 ist in schematischer Darstellung der Niederhalter in einem Rahmen der Dachöffnung in einem Dach eines Kraftfahrzeuges in vereinfachter Darstellung zum einen in niedergedruckter Position und zum anderen in Aufstellposition eingezeichnet. Mit dem Schiebemechanismus für das Dachfenster 20 bzw. das Schiebedach sind dabei zwei Niederhalter 22 und 21 gekoppelt. Der Niederhalter 22 drückt den Windabweiser 1 in die vorgesehene Ausnehmung, so daß die Feder 6 gespannt ist. Die Feder 6 ist mit dem Verankerungsteil 23, wie vorher schon angegeben, in den Windabweiser direkt eingebettet. Das Material, nämlich Metalldruckgußmaterial, für die Herstellung des Windabweisers gemäß der Erfindung stellt dabei sicher, daß eine ausreichende Festigkeit gegeben ist, um die Kräfte von der Feder 6 auf den Windabweiser 1 zu übertragen, ohne daß die Verbindungsstellen mechanisch überbelastet werden. Der Niederhalter 22 gleitet auf der Oberseite des Schenkels 2 entlang. Selbstverständlich ist dies auch auf der gegenüberliegenden Seite der Fall. In geschlossener Position des Dachfensters 20 nimmt dabei der Windabweiser 1 die untere Lagerungsposition ein. Wird das Dach, wie aus Fig. 4 ersichtlich, nach links zurückgezogen, so gibt der Niederhalter 22 den Schenkel 2 frei und die Feder 6 bewirkt durch das Gleitkunststoffpolster 12, das auf die Gleitfläche 24 drückt, daß der Windabweiser 1 aufgestellt wird, so daß die Windabweisungsfläche 25 aus der Dachebene nach oben hervorsteht. Der Fahrtwind wird also nach oben abgelenkt und kann nicht durch die Dachöffnung in unerwünschter Weise einströmen, wodurch Zug im Fahrgastraum weitestgehend vermieden wird. Bei besonderen Dachkonstruktionen ist diese Wirkung bereits erzielbar, ohne daß der Windabweiser über die Dachebene hervorsteht. Dies hängt jeweils von der konstruktiven Gestaltung der Dachöffnung ab. Aus Fig. 4 ist ferner ersichtlich, daß der zweite Niederhalter 21 so mit dem Verschiebeteil des Dachfensters 20 gekoppelt ist, daß er in der dargestellten Position auf das Anschlagelement 4 aufgreift und somit die Aufstellposition fixiert.

## Patentansprüche

1. Windabweiser in einer Dachöffnung eines Kraftfahrzeuges mit einem die Dachöffnung einfassenden Rahmen, in welchem ein Schiebedach oder ein Dachsichtfenster längsverschieblich gelagert ist, welcher Windabweiser vorn in der Dachöffnung querverlaufend vorgesehen und derart schwenkbeweglich am Rahmen gelagert ist, daß der windabweisungsteil beim Zurückschieben des Schiebedaches oder des Dachsichtfensters in oder aus der Dachöffnung unter der Wirkung von Federkräften so weit ausgehoben ist, daß der Fahrtwind durch die in Fahrtrichtung nach oben schrägverlaufende Abgleitfläche abgleitet, **dadurch gekennzeichnet**, daß der Windabweiser ( 1, 2, 3; Fig. 1) aus Metalldruckguß besteht und im Druckgußverfahren gefertigt ist, daß der Windabweisungsteil (1) des Windabweisers Querschnittsform aufweist, die dreieckförmig verläuft und deren Spitze sich an der Oberseite befindet, und daß von der Unterseite her Kammern mit Verstärkungsrippen in den Körper eingearbeitet sind.

2. Windabweiser nach Anspruch 1, **dadurch gekennzeichnet**, daß er aus Magnesium oder einer Magnesiumlegierung besteht.

3. Windabweiser nach Anspruch 1, **dadurch gekennzeichnet**, daß er aus Aluminium oder Aluminiumlegierungen besteht.

4. Windabweiser nach einem der vorhergehenden Ansprüche, **dadurch gekennzeichnet**, daß der Windabweiser (Mittelteil 1) seitlich sich nach hinten erstreckende Schenkel (2 und 3) aufweist, an deren Enden Lagerelemente (Zapfen 8 und 9) befestigt sind, die in dem Rahmen des Schiebedaches oder des Dachsichtfensters schwenkbeweglich gelagert sind, und daß an der Unterseite der Schenkel (2 und 3) sich in Richtung der Schwenklager nach unten erstreckende Blattfedern (6 und 7) vorgesehen sind, die sich an einer Stützwand des Rahmens abstützen und gegen deren Kraft der Windabweiser beim Vorschieben des Dachfensters oder des Schiebedaches beim Verschließen niederdrückbar ist.

5. Windabweiser nach Anspruch 4, **dadurch gekennzeichnet**, daß in den seitlichen Schenkeln (2 und 3) Lagerungskammern (13) zur Aufnahme der Blattfeder (6) im niedergedrückten Zustand des Windabweisers in dem Rahmen des Dachfensters vorgesehen sind.

6. Windabweiser nach Anspruch 4 oder 5, **dadurch gekennzeichnet**, daß die Feder (6) in das Metall des Windabweisers mit einem Verankerungsende eingegossen ist und der federnde Schenkel aus der Ebene des seitlichen Schenkels (2 bzw. 3) hervorsteht.

7. Windabweiser nach einem der Ansprüche 4 bis 6, **dadurch gekennzeichnet**, daß die Blattfeder (6) relativ schmal ausgebildet ist und eine untere leicht gebogene Gleitfläche (Ansatz 10) aufweist, die beim Niederdrücken auf ein Gleitgegenlager des Rahmens aufgreift, und/oder daß ein Kunststoffgleitpolster (12) am Ende aufgebracht oder aufgespritzt ist.

8. Windabweiser nach einem der vorhergehenden Ansprüche, **dadurch gekennzeichnet**, daß über die Länge des Windabweisers verteilt an der Unterseite zwei oder mehrere Kunststoffdämpfungspolster angebracht oder angespritzt sind.

9. Verfahren zur Herstellung eines Windabweisers nach einem der vorhergehenden Ansprüche, **dadurch gekennzeichnet**, daß der Windabweiser im Warmkammerverfahren oder im Kaltkammerverfahren aus Magnesium oder Aluminium oder deren Legierungen als Druckgußteil hergestellt ist und daß vor dem Druckguß die Feder mit dem einzubettenden Verankerungsende in die Form eingelegt ist.

10. Verfahren nach Anspruch 9, **dadurch gekennzeichnet**, daß in einem weiteren Arbeitsschritt das Kunststoffgleitpolster an die Feder angespritzt und/oder das Kunststoffdämpfungspolster auf die Unterseite des Windabweisers aufgespritzt ist.

11. Verfahren nach Anspruch 10, **dadurch gekennzeichnet**, daß das Kunststoffdämpfungspolster in eine Ausnehmung verankert eingespritzt ist.

## Claims

1. Wind deflector in a roof opening of a motor vehicle, comprising a frame which edges the roof opening and in which a sliding roof or a roof viewing window is mounted to be longitudinally displaceable, which wind deflector is provided extending transversely in the roof opening at the front and is mounted at the frame to be pivotably movable in such a manner that the wind deflecting part during sliding back of the sliding roof or of the roof viewing window in or out of the roof opening is raised so far under the effect of spring forces that the travel wind deflects by the deflecting surface extending obliquely upwardly in travel direction, characterised thereby that the wind deflector (1, 2, 3; Fig. 1) consists of a metal die casting and is produced in the die casting process, that the wind deflecting part (1) of the wind deflector has a cross-sectional shape which extends in the shape of a triangle and the apex of which is disposed at the upper side, and that chambers with reinforcing ribs are worked into the body from the underside.

2. Wind deflector according to claim 1, characterised thereby that it consists of magnesium or a magnesium alloy.

3. Wind deflector according to claim 1, characterised thereby that it consists of aluminium or aluminium alloys.

4. Wind deflector according to one of the preceding claims, characterised thereby that the wind deflector (middle part 1) has lateral limbs (2 and 3), which extend rearwardly and at the ends of which are fastened bearing elements (pins 8 and 9) which are mounted in the frame of the sliding roof or of the roof viewing window to be pivotably movable, and that leaf springs (6 and 7) extending downwardly in the direction of the pivot bearing are provided at the underside of the limbs (2 and 3) and are supported at a side wall of the frame, the wind deflector being pressable down against the force of the leaf springs during pushing forward of the roof window or of the sliding roof when closing.

5. Wind deflector according to claim 4, characterised thereby that bearing chambers (13) for reception of the leaf springs (6) in the pressed-down state of the wind deflector in the frame of the roof window are provided in the lateral limbs (2 and 3).

6. Wind deflector according to claim 4 or 5, characterised thereby that the spring (6) is cast into the metal of the wind deflector by an anchoring end and the resilient limb protrudes out of the plane of the lateral limb (2 or 3).

7. Wind deflector according to one of claims 4 to 6, characterised thereby that the leaf spring (6) is constructed to be relatively narrow and has a slightly curved lower slide surface (projection 10), which on the pressing down engages on a slide counter-surface of the frame, and/or that a synthetic material slide cushion (12) is mounted or injection moulded on at the end.

8. Wind deflector according to one of the preceding claims, characterised thereby that two or more synthetic material damping cushions are mounted or injection moulded on at the underside and distributed over the length.

9. Method of manufacturing a wind deflector according to one of the preceding claims, characterised thereby that the wind deflector is produced in the hot chamber process or in the cold chamber process from magnesium or aluminium or alloys thereof as a die cast part and that prior to the die casting the spring is placed by its anchoring end, which is to be embedded, into the mould.

10. Method according to claim 9, characterised thereby that in a further working step the synthetic material slide cushion is injection moulded at the spring and/or the synthetic material damping cushion is injection moulded onto the underside of the wind deflector.

11. Method according to claim 10, characterised thereby that the synthetic material damping cushion is anchored by injection moulding in a recess.

## Revendications

1. Déflecteur de vent dans une ouverture de toit d'un véhicule automobile avec un cadre entourant l'ouverture de toit, cadre dans lequel est logé un toit coulissant ou une fenêtre de toit déplaçable longitudinalement, lequel déflecteur de vent est prévu à l'avant dans l'ouverture de toit en déplacement transversal et logé dans le cadre de façon à être mobile en pivotement, de telle sorte que la partie déflectrice de vent lors de l'escamotage du toit coulissant ou de la fenêtre de toit dans l'ouverture de toit est relevée sous l'action de forces de ressort, de telle sorte que le vent induit par le déplacement du véhicule glisse le long d'une surface de glissement dans le sens de la marche vers le haut et de façon oblique, caractérisé en ce que le déflecteur (1, 2, 3 ; fig. 1) est constitué par un métal coulé sous pression et en ce qu'il est fabriqué selon un procédé de coulée sous pression, en ce que la partie déflectrice du vent (1) du déflecteur présente une forme en coupe transversale de configuration triangulaire avec la pointe située sur le côté supérieur et en ce qu'à partir du côté inférieur, sont ménagées des alvéoles avec des nervures de renforcement dans le corps.

2. Déflecteur de vent selon la revendication 1, caractérisé en ce qu'il est constitué de magnésium ou d'un alliage de magnésium.

3. Déflecteur de vent selon la revendication 1, caractérisé en ce qu'il est constitué d'aluminium ou d'un alliage d'aluminium.

4. Déflecteur de vent selon une des revendications précédentes, caractérisé en ce que le déflecteur de vent (pièce médiane 1) comporte des branches (2 et 3) qui s'étendent latéralement vers l'arrière, branches sur les extrémités desquelles sont fixés des éléments de palier (tourillons 8 et 9) qui sont montés en pivotement dans le cadre du toit coulissant ou de la fenêtre de toit et en ce que sur le côté inférieur des branches (2 et 3) sont prévus des ressorts à lame (6 et 7) s'étendant vers le bas dans la direction des paliers pivotants qui reposent sur la paroi d'appui du cadre et en opposition à sa force, lors du coulissement de la fenêtre de toit ou du toit coulissant pour la fermeture, le déflecteur de vent peut être enfoncé ou escamoté.

5. Déflecteur de vent selon la revendication 4, caractérisé en ce que dans les branches latérales (2 et 3) sont prévues des chambres de logement (13) pour recevoir les ressorts à lame (6) à l'état enfoncé du déflecteur de vent dans le cadre de la fenêtre de toit.

6. Déflecteur de vent selon la revendication 4 ou 5, caractérisé en ce que les ressorts (6) sont coulés dans le métal du déflecteur de vent avec une extrémité d'ancrage et la branche élastique ou montée sur ressort fait saillie par rapport au plan de la branche latérale (2 ou 3).

7. Déflecteur de vent selon l'une des revendications 4 à 6, caractérisé en ce que le ressort à lame (6) est de conception relativement étroite et comporte une face de glissement inférieure légèrement courbée (appendice 10) qui lors de l'enfoncement ou escamotage, vient en préhension sur le contre-palier de glissement du cadre, et/ou en ce qu'un coussinet de coulissement en plastique (12) est appliqué ou coulé sur l'extrémité.

8. Déflecteur de vent selon l'une des revendications précédentes, caractérisé en ce que sur la longueur du déflecteur de vent sont répartis sur le côté inférieur deux ou plus de deux coussinets d'amortissement en plastique.

9. Procédé pour la préparation d'un déflecteur de vent selon l'une des revendications précédentes, caractérisé en ce que le déflecteur de vent est fabriqué dans un procédé en chambre chaude ou dans un procédé en chambre froide à partir de magnésium ou d'aluminium ou de leurs alliages en tant que pièce de coulée sous pression et en ce qu'avant la coulée sous pression, les ressorts sont mis en forme dans l'extrémité d'ancrage à encastrer.

10. Procédé selon la revendication 9, caractérisé en ce que dans une autre étape opératoire, le coussinet de coulissement en plastique est appliqué par pulvérisation sur le ressort et/ou le coussinet d'amortissement en plastique est appliqué par pulvérisation sur le côté inférieur du déflecteur de vent.

11. Procédé selon la revendication 10, caractérisé en ce que le coussinet d'amortissement en plastique est ancré par coulée dans un évidement.
